# EUROPEAN PATENT SPECIFICATION

(11) **EP 1 099 877 B1**
(45) Date of publication and mention of the grant of the patent: **30.05.2007**
(21) Application number: 00907950.0
(22) Date of filing: 09.03.2000
(51) Int. Cl.: F16F 15/30, F16F 15/12, F16F 15/315

(54) **FLYWHEEL OF INTERNAL COMBUSTION ENGINE**
SCHWUNGRAD FÜR VERBRENNUNGSMOTOR
VOLANT CINETIQUE D'UN MOTEUR A COMBUSTION INTERNE

(30) Priority: 26.04.1999 JP 11784299
(43) Date of publication of application: 16.05.2001
(73) Proprietor: UNISIA JECS CORPORATION, Atsugi-shi, Kanagawa-ken 243-8510 (JP)
(72) Inventor: TSUCHIYA, Syouichi, Unisia Jecs Corporation, Atsugi-shi, Kanagawa 243-8510 (JP); MATSUOKA, Masamichi, Unisia Jecs Corporation, Atsugi-shi, Kanagawa 243-8510 (JP)
(74) Representative: Hager, Thomas Johannes
(86) International application number: PCT/JP2000/001407
(87) International publication number: WO 2000/065249

(56) References cited:
- WO-A-98/42994
- DE-A1- 19 840 215
- GB-A- 2 158 183
- JP-A- 9 217 791
- JP-A- 11 082 634
- JP-U- 1 067 352
- JP-U- 63 132 143
- US-A- 2 675 225
- US-A- 5 465 635

## Description

### TECHNICAL FIELD

The present invention relates to flywheels used in internal combustion engines for motor vehicle or the like, for reducing various vibrations due to engine operation.

### BACKGROUND ART

In a conventional flywheel for an internal combustion engine, when a mass body is directly connected to the crankshaft, bending vibration is produced due to the mass of the mass body, which tends to cause abnormal noise such as booming noise confined in a passenger compartment of a motor vehicle. Therefore, attempts have been made to shift the natural bending vibration frequency of the crankshaft system out of the normal service range and thereby to reduce the abnormal noise by connecting the crankshaft and the mass body through an elastic plate that has high rigidity in a twisting direction and low rigidity in a bending direction.

A Japanese Patent *Kokai* Publication No. H09-217791, for example, discloses a flywheel for an internal combustion engine, in which a crankshaft and a mass body are connected through an elastic plate having flexibility in the bending direction, the elastic plate is secured, on the inner circumferential side, to the crankshaft by attaching bolts, and the mass body is connected to the outer circumferential side of the elastic plate.

In an axial gap formed between the elastic plate and the mass body, there is provided a plate-shaped spring member capable of contacting with the mass body with a predetermined clearance, and the inner circumferential side of the plate-shaped spring member is secured to the crankshaft.

The plate-shaped spring member when put in contact with the mass body, achieves superior effect in reducing bending vibration in cooperation with the elastic plate. By deflecting between the elastic plate and the mass body, the spring member causes friction at an end portion in the contact portion with the mass body, and performs a frictional damping operation against the bending vibration.

In the conventional example, the end portion of the plate-shaped spring member for contacting with the mass body is edged, and this edged end portion causes friction by contacting with the mass body.

When the edged end portion of the spring member contacts with the mass body and causes the friction, the damping effect by the friction is not stable because the contact is not smooth, and the durability can be decreased because of the occurrence of local wear in the contact portion.

DE 198 40 215 A1 discloses a flywheel for an internal combustion engine, provided with an approximately disc-shaped elastic plate that is fixed, at an inner circumferential part, to a crankshaft and that has a flexibility in a bending direction and a mass body fixed to an outer circumferential part of the elastic plate. The document further describes a flywheel for an internal combustion engine wherein, between the elastic plate in a part on a radially outward side of the fixing position to the crankshaft and the mass body, there is provided an axial gap in an axial direction, wherein there is disposed, in the gap, a spring member with both end sides contacting, respectively, with the elastic plate and the mass body.

US-A-5 465 635 discloses a crankshaft assembly for an internal combustion engine including a crankshaft, an elastic member fixed to the crankshaft and a flywheel fixed to the elastic member such that the flywheel is supported in an elastic relationship with the crankshaft. The elastic member has a rigidity in its rotating direction large enough to effectively transmit a driving power to a transmission through a clutch. On the other hand, the elastic member has a rigidity in an axial direction of the crankshaft small enough to shift a resonance frequency of a bending vibration out of a target frequency band of a forced vibration.

The present invention is devised in consideration of the above-mentioned conventional situation, and aims at providing a flywheel for an internal combustion engine which is capable of providing a stable damping effect with smooth frictional contact of the spring member, and which has a superior durability by reducing the local wear of the contact portion.

According to the invention, the object is solved by the features of the main claim. The sub-claims contain further preferred developments of the invention.

### DISCLOSURE OF THE INVENTION

In the present invention, a flywheel for an internal combustion engine, provided with an approximately disc-shaped elastic plate that is fixed, at an inner circumferential part, to a crankshaft, and that has a flexibility in a bending direction, and a mass body fixed to an outer circumferential part of the elastic plate, is arranged that, between the elastic plate in a part on a radial outward side of a fixing position to the crankshaft and the mass body, there is provided an axial gap, that there is disposed, in the axial gap, a spring member with both end sides contacting, respectively, with the elastic plate and the mass body, and that, in either or both of a contact portion between the spring member and the elastic plate contact and a contact portion between the spring member and the mass body, either or both of contact surfaces is curved.

Therefore, according to the present invention, the elastic plate and the spring member change the natural bending frequency of the crankshaft system out of the normal range and absorb the bending vibration. By deflecting between the elastic plate and the mass body, the spring member at each end portion causes friction in the contact portion with the elastic plate or the mass body, and achieves the frictional damping effect against the bending vibration.

In the present invention, in either or both of the contact portion between the spring member and the elastic plate and the contact portion between the spring member and the mass body, either or both of the contact surfaces is curved. Therefore, the spring member touches the elastic plate or the mass body smoothly and hence provides a stable frictional damping effect. Moreover, the local wear of the contact portion is reduced as much as possible.

Therefore, it is possible to obtain a flywheel for an internal combustion engine in which the spring member contacts smoothly with the elastic plate or the mass body and thereby provides stable frictional damping effect, and the local wear of the contact portions to provide good durability.

Furthermore, in the present invention, an arrangement is such that the spring member is comprised of a press formed disc spring shaped in the shape of a truncated cone, and a contact surface of the spring member is formed into a curved shape at the time of press forming. Therefore, according to the present invention, a contact surface can be formed into a curved shape without any special processing step.

In the present invention, moreover, an arrangement is such that the elastic plate is press formed, and a contact surface of the elastic plate is formed into a curved shape at the time of press forming. Therefore, a contact surface can be formed into a curved shape without any special processing step.

In the present invention, a flywheel for an internal combustion engine, provided with an approximately disc-shaped elastic plate that is fixed, at an inner circumferential part, to a crankshaft together with a reinforcing plate, and that has a flexibility in a bending direction, and a mass body fixed to an outer circumferential part of the elastic plate, is arranged that, between the reinforcing plate in a part on a radial outward side of a fixing position to the crankshaft and the mass body, there is provided an axial gap, that there is disposed, in the axial gap, a spring member with both end sides contacting, respectively, with the reinforcing plate and the mass body, and that, in either or both of a contact portion between the spring member and the reinforcing plate contact and a contact portion between the spring member and the mass body, either or both of contact surfaces is curved.

Therefore, according to the present invention, the reinforcing plate and the spring member change the natural bending frequency of the crankshaft system out of the normal range and absorb the bending vibration. By deflecting between the reinforcing plate and the mass body, the spring member at each end portion causes friction in the contact portion with the reinforcing plate or the mass body, and achieves the frictional damping effect against the bending vibration. The reinforcing plate reinforces the fixing portion of the elastic plate

In the present invention, in either or both of the contact portion between the spring member and the reinforcing plate and the contact portion between the spring member and the mass body, either or both of the contact surfaces is curved. Therefore, the spring member touches the reinforcing plate or the mass body smoothly and hence provides a stable frictional damping effect. Moreover, the local wear of the contact portion is reduced as much as possible.

Therefore, it is possible to obtain a flywheel for an internal combustion engine in which a stable frictional damping effect is attainable with a smooth friction contact of the spring member, and the durability is superior with less local wear of the contact portion.

Since the spring member is disposed in contact with the reinforcing plate and the mass body, there is formed, between the spring member and the elastic member, a relatively broad space, which acts to improve the cooling effect of the spring member.

Furthermore, in the present invention, an arrangement is such that the spring member is comprised of a press formed disc spring shaped in the shape of a truncated cone, and a contact surface of the spring member is formed into a curved shape at the time of press forming. Therefore, according to the present invention, a contact surface can be formed into a curved shape without any special processing step.

In the present invention, moreover, an arrangement is such that the reinforcing plate is press formed, and a contact surface of the reinforcing plate is formed into a curved shape at the time of press forming. Therefore, a contact surface can be formed into a curved shape without any special processing step.

### BRIED DESCRIPTION OF THE DRAWINGS

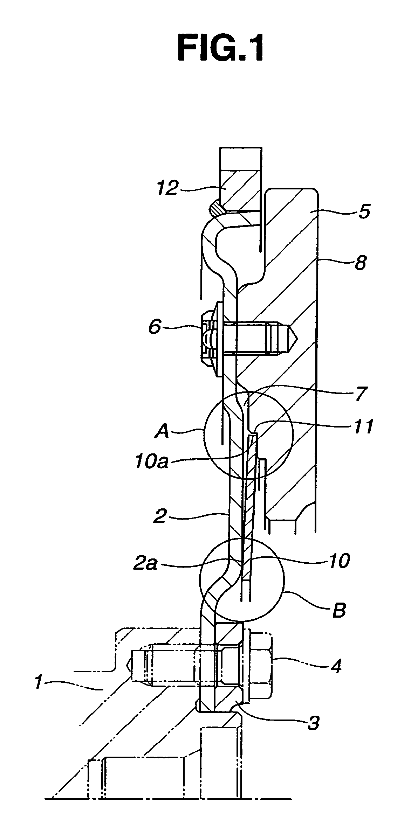

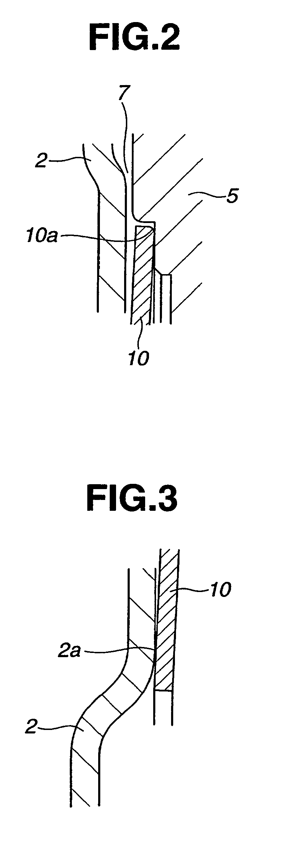

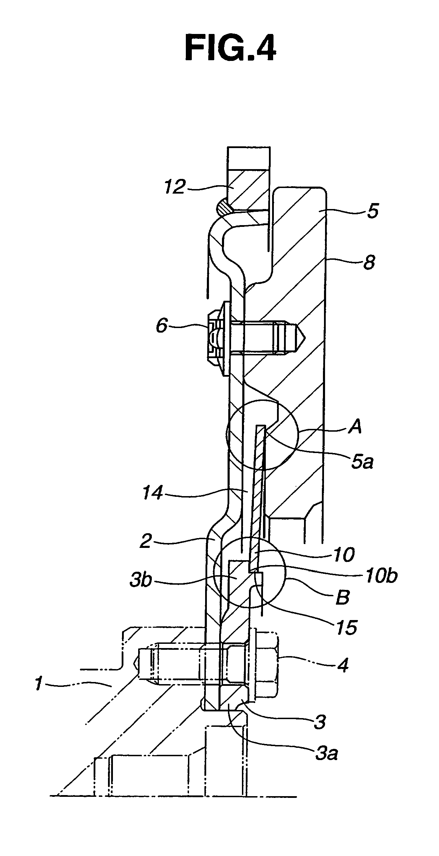

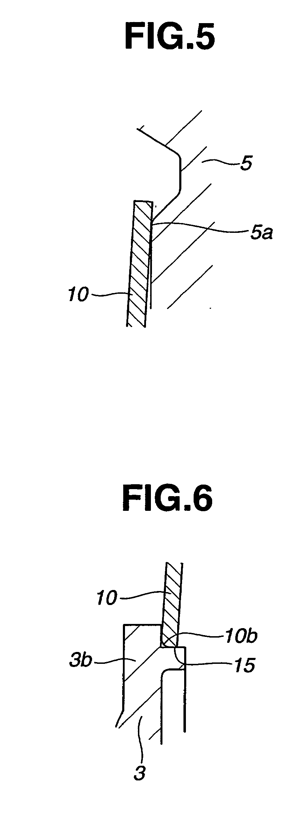

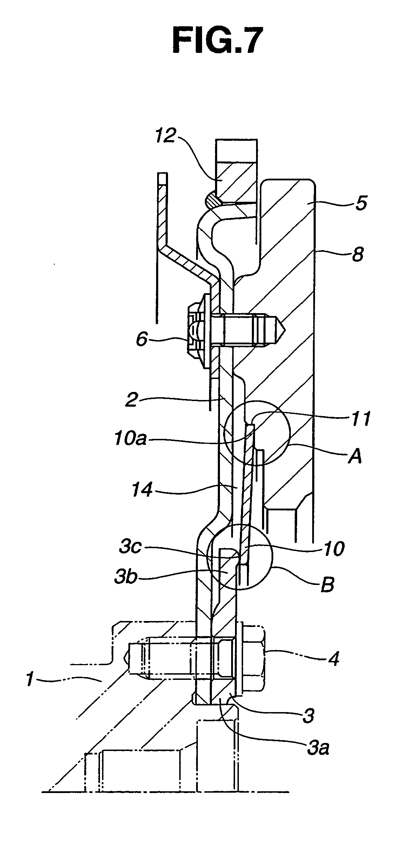

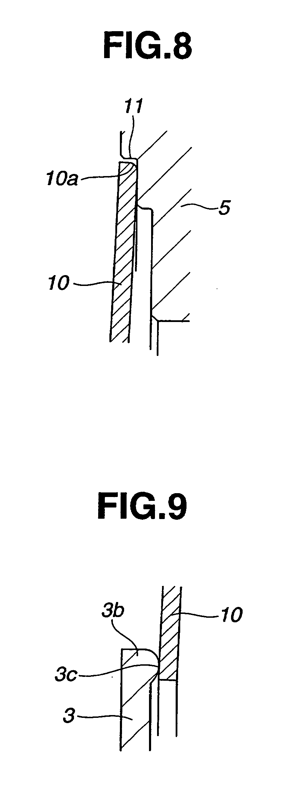

FIG. 1 is a sectional view of a flywheel for an internal combustion engine showing an embodiment of the invention. FIG. 2 is an enlarged view of a part A of FIG. 1. FIG. 3 is an enlarged view of a part B of Fig. 1. Fig. 4 is a view similar to FIG. 1, but showing another embodiment of the invention. FIG. 5 is an enlarged view of a part A of FIG. 4. FIG. 6 is an enlarged view of a part B of FIG. 4. FIG. 7 is a view similar to FIG. 1, but showing still another embodiment of the invention. FIG. 8 is an enlarged view of a part A of FIG. 7. FIG. 9 is an enlarged view of a part B of FIG. 7.

### BEST MODE(S) FOR CARRYING OUT THE INVENTION

The following is detailed explanation on embodiments of the present invention based on the drawings.

FIG. 1 is a sectional view of a flywheel for an internal combustion engine showing an embodiment of the invention. FIG. 2 is an enlarged view of a part A of FIG. 1. FIG. 3 is an enlarged view of a part B of FIG. 1.

In the figures, a reference numeral 1 denotes a crankshaft of the internal combustion engine. A numeral 2 denotes an approximately disk-shaped elastic plate having a flexibility in a bending direction. The elastic plate 2 is secured, at its inner circumferential part, to the crankshaft 1 together with a reinforcing plate 3 by attaching bolts 4. To be precise, the elastic plate 2 and the reinforcing plate 3 are attached and fixed to the crankshaft 1 by the attaching bolts 4 passing through the elastic plate 2 and the reinforcing plate 3. Thus, the reinforcing plate 3 reinforces the fixing portion of the elastic plate 2.

A reference numeral 5 denotes a mass body secured to the outer circumferential side of the elastic plate 2. The mass body 5 is shaped approximately like a ring, and its outer circumferential side is attached and fixed to the outer circumferential side of the elastic plate 2 by attaching bolts 6 passing through the elastic plate 2. The mass body 5 contacts with the elastic plate 2 only at its fixing portion to the elastic plate 2, and between the remaining portion and the elastic plate 2, there is formed a predefined axial gap 7. On the side of the mass body 5 opposite to the elastic plate 2, there is formed a frictional surface 8 with which a frictional plate of an unshown clutch device contacts.

A reference numeral 10 denotes a spring member. The spring member 10 is disposed in the axial gap 7 between the elastic plate 2 and the mass body 5, and both sides touch the elastic plate 2 and the mass body 5, respectively. The spring member 10 in this embodiment is comprised of a disc spring shaped like a truncated cone. The outer circumference of the spring member 10 is held in place by a positioning step 11 formed in the mass body 5, and hence the spring member 10 is positioned in the radial direction.

In the contact portion at which the spring member 10 and the elastic plate 2 contact with each other and the contact portion at which the spring member 10 and the mass body 5 contact with each other, at least one of the contact surfaces is curved. Namely, in the contact portion between the spring member 10 and the elastic plate 2, the contact surface 2a of the elastic plate 2 is curved. (See FIG. 3.) In the contact portion between the spring member 10 and the mass body 5, the contact surface 10a of the spring member 10 is curved. (See FIG. 2.)

The elastic plate 2 is a plate formed by pressing, and the contact surface 10a of the elastic plate 10 is formed in a curved surface at the time of the press forming.

The spring member 10 is comprised of a press-formed disc spring shaped like a truncated cone, and the contact surface 10a of the disc spring (spring member 10) is shaped into a curved surface at the time of the press forming.

It is optional to employ the structure where at least one of the contact surfaces is curved in either the contact portion between the spring member 10 and the elastic plate 2 or the contact portion between the spring member 10 and the mass body 5.

On the outer circumference of the elastic plate 2, a ring gear 12 is fixed by welding.

In this structure, as the crankshaft 1 is driven to rotate, the rotational driving force from the crankshaft 1 is transmitted to the mass body 5 through the elastic plate 2.

In this case, the elastic plate 2 and the spring member 10 change the natural bending frequency of the crankshaft system out of the normal service range as well as absorb the bending vibration. When the spring member 10 deflects between the elastic plate 2 and the mass body 5, each end portion of the spring member 10 causes friction at the contact portion with the elastic plate 2 or the mass body 5, and thereby acts to achieve the frictional damping effect against the bending vibration.

In the contact portion between the spring member 10 and the elastic plate 2 and the contact portion between the spring member 10 and the mass body 5, at least one of the contact surfaces is curved. In this embodiment, the contact surface 2a of the elastic plate 2 is curved in the contact portion between the spring member 10 and the elastic plate 2. In the contact portion between the spring member 10 and the mass body 5, the contact surface 10a of the spring member 10 is curved.

When, therefore, the spring member 10 deflects between the elastic plate 2 and the mass body 5, and acts to produce the frictional damping effect against the bending vibration with friction produced by the end portions of the spring member 10 at the contact portions with the elastic plate 2 and the mass body 5, the contact is smooth because of the curvature of the contact surfaces 2a and 10a. Therefore, it is possible to obtain the stable damping effect by the contact of the spring member 10 with the elastic plate 2 and the friction with the mass body 5, and to prevent local wear advantageously in the contact portions.

Therefore, it is possible to obtain a stable frictional damping effect with smooth frictional contact of the spring member 10, and to obtain a flywheel for an internal combustion engine, having a superior durability with less local wear in the contact portions.

The spring member 10 is formed from a press-formed disc spring shaped like a truncated cone, and the contact surface 10a of the disc spring (spring member 10) is formed into a curved surface at the time of the press forming. Therefore, the curved contact surface 10a can be obtained without any special process step.

The elastic plate 2 is formed by press forming and its contact surface 2a is curved at the time of the press forming. Therefore, the curved contact surface 2a can be formed without any special process step.

The outer circumference of the spring member 10 is held in place by the positioning step 11 formed in the mass body 5, so it is easy to place the spring member 10 at the correct position and it is possible to prevent the spring member 10 from moving in the radial direction.

FIGS. 4 to 9 are views for showing different embodiments of the present invention. These embodiments are different from the preceding embodiment in that an axial gap 14 is formed between the reinforcing plate 3 and the mass body 5, and there is disposed, in this gap 14, the spring member 10 with both ends, respectively, contacting with the reinforcing plate 3 and the mass body 5. The following is explanation on these embodiment. In the explanation, the same reference numerals are given to the same components as in the preceding embodiment, and repetitive explanations are omitted.

First, an explanation is given of the embodiment shown in FIGS. 4 to 6. In this embodiment, the beforementioned reinforcing plate 3 has a plate-shaped base portion 3a contacting with the inner circumferential part of the elastic plate 2, and an annular flange portion 3b extending from the outer circumference of the base portion 3a in the radial direction. The base portion 3a reinforces the inner circumferential fixing portion of the elastic plate 2 fixed to the crankshaft 1, and the annular flange portion 3b is so arranged that the spring member 10 contacts with the annular flange 3b. Moreover, there is formed, in the annular flange 3b of the reinforcing plate 3, a positioning step 15 for the spring member 10.

The spring member 10 is disposed in the axial gap 14 between the reinforcing plate 3 and the mass body 5. To be precise, it is disposed between the annular flange 3b formed in the reinforcing plate 3 and the mass body 5, and both end sides contact with the reinforcing plate 3 and the mass body 5. The spring member 10 is positioned in the radial direction with the inner circumference of the spring member 10 held in place by the positioning step 15.

In the contact portion between the spring member 10 and the reinforcing plate 3 and the contact portion between the spring member 10 and the mass body 5, at least one of the contact surfaces is curved. That is, in the contact portion between the spring member 10 and the reinforcing plate 3, the contact surface 10b of the spring member 10 is curved. (See FIG. 6.) In the contact portion between the spring member 10 and the mass body 5, the contact surface 5a of the mass body 5 is curved. (See FIG. 5.)

The mass body 5 is machined, and the contact surface 5a of the mass body 5 is formed in a curved surface at the timing of the machining.

It is optional to employ the structure where at least one of the contact surfaces is curved in either the contact portion between the spring member 10 and the reinforcing plate 3 or the contact portion between the spring member 10 and the mass body 5.

In this structure, the elastic plate 2 and the spring member 10 change the natural bending frequency of the crankshaft system out of the normal range, and absorb the bending vibration. When the spring member 10 deflects between the reinforcing plate 3 and the mass body 5, each end portion of the spring member 10 causes friction at the contact portion with the reinforcing plate 3 or the mass body 5, and thereby acts to achieve the frictional damping effect against the bending vibration.

In the contact portion between the spring member 10 and the reinforcing plate 3 and the contact portion between the spring member 10 and the mass body 5, at least one of the contact surfaces is curved. In the contact portion between the spring member 10 and the reinforcing plate 3, the contact surface 10b of the spring member 10 is curved. In the contact portion between the spring member 10 and the mass body 5, the contact surface 5a of the mass body 10 is curved.

When, therefore, the spring member 10 deflects between the elastic plate 2 and the mass body 5, and acts to produce the frictional damping effect against the bending vibration with friction produced by the end portions of the spring member 10 at the contact portions with the reinforcing plate 3 and the mass body 5, the contact is smooth because of the curvature of the contact surfaces 5a and 10b. Therefore, it is possible to obtain the stable damping effect by the contact of the spring member 10 with the reinforcing plate 3 and the friction with the mass body 5, and to prevent local wear advantageously in the contact portions.

Therefore, it is possible to obtain a stable frictional damping effect with smooth frictional contact of the spring member 10, and to obtain a flywheel for an internal combustion engine, having a superior durability with less local wear in a contact portion.

Since the spring member 10 is disposed in contact with the reinforcing plate 3 and the mass body 10, there is formed, between the spring member 10 and the elastic plate 2, a relatively broad space, which can serve to improve the cooling effect of the spring member 10.

The inner circumference of the spring member 10 is held in place by the positioning step 15 formed in the reinforcing plate 3, so it is easy to place the spring member 10 at the correct position and it is possible to prevent the spring member 10 from moving in the radial direction.

Next, an explanation is given of the embodiment shown in FIGS. 7 to 9. In this embodiment, the spring member 10 is disposed between the flange 3b formed in the reinforcing plate 3 extending in the outer radial direction and the mass body 5, and the spring member is positioned in the radial direction with the outer circumference being held in place by the positioning step 11 formed in the mass body 5.

Again in this embodiment, in the contact portion of the spring member 10 with the reinforcing plate 3 and the contact portion of the spring member 10 with the mass body 5, at least one of the contact surfaces is curved. That is, in the contact portion of the spring member 10 with the reinforcing plate 3, the contact surface 3c of the reinforcing plate 3 is curved. (See FIG. 9.) In the contact portion of the spring member 10 with the mass body 5, the contact surface 10a of the spring member 10 is curved. (See FIG. 8.)

The reinforcing plate 3 is formed by press forming, and the contact surface 3c of the reinforcing plate 3 is formed into a curved surface at the time of the press forming.

It is optional to employ the structure where at least one of the contact surfaces is curved in either the contact portion between the spring member 10 and the reinforcing plate 3 or the contact portion between the spring member 10 and the mass body 5.

In this structure, the elastic plate 2 and the spring member 10 change the natural bending frequency of the crankshaft system out of the normal range, and absorb the bending vibration. When the spring member 10 deflects between the reinforcing plate 3 and the mass body 5, each end portion of the spring member 10 causes friction at the contact portion with the reinforcing plate 3 or the mass body 5, and thereby acts to achieve the frictional damping effect against the bending vibration.

In the contact portion between the spring member 10 and the reinforcing plate 3 and the contact portion between the spring member 10 and the mass body 5, at least one of the contact surfaces is curved. In this embodiment, the contact surface 3c of the reinforcing plate 3 is curved in the contact portion between the spring member 10 and the reinforcing plate 3. In the contact portion between the spring member 10 and the mass body 5, the contact surface 10a of the spring member 10 is curved.

When, therefore, the spring member 10 deflects between the reinforcing plate 3 and the mass body 5, and acts to produce the frictional damping effect against the bending vibration with friction produced by the end portions of the spring member 10 at the contact portions with the reinforcing plate 3 and the mass body 5, the contact is smooth because of the curvature of the contact surfaces 3c and 10a. Therefore, it is possible to obtain the stable damping effect by the contact of the spring member 10 with the reinforcing plate 3 and the friction with the mass body 5, and to prevent local wear advantageously in the contact portions.

Therefore, it is possible to obtain a stable frictional damping effect with smooth frictional contact of the spring member 10, and to obtain a flywheel for an internal combustion engine, having a superior durability with less local wear in the contacting portions.

The reinforcing plate 3 is formed by press forming, and the contact surface 3c of the reinforcing plate 3 is formed into a curved surface at the time of the press forming. Therefore, the curved contact surface 3c can be obtained without any special process step.

Since the spring member 10 is disposed in contact with the reinforcing plate 3 and the mass body 5, there is formed, between the spring member 10 and the elastic plate 2, a relatively broad space, which serves to improve the cooling effect of the spring member 10.

The outer circumference of the spring member 10 is held in place by the positioning step 11 formed in the mass body 5, so it is easy to place the spring member 10 at the correct position and it is possible to prevent the spring member 10 from moving in the radial direction.

## Claims

1. A flywheel for internal combustion engine, provided with an approximately disc-shaped elastic plate (2) that is fixed, at an inner circumferential part, to a crankshaft (1), and that has a flexibility in a bending direction, and a mass body (5) fixed to an outer circumferential part of the elastic plate; wherein, between the elastic plate (2) in a part on a radial outward side of a fixing position to the crankshaft and the mass body, there is provided an axial gap (7) in an axial direction; and wherein there is disposed, in the axial gap (7), a spring member (10) including a first end portion contacting with the mass body (5), and a second end portion contacting with the elastic plate (2);
**characterized**
**in that** the spring member (10) is held in the axial gap (7) so that the second end portion of the spring member is in frictional contact with the elastic plate (2) so as to achieve a frictional damping effect
**in that**, in either or both of a contact portion at which the spring member (10) and the elastic plate (2) contact with each other and a contact portion at which the spring member (10) and the mass body (5) contact with each other, either or both of contact surfaces (2a, 10a) is curved.

2. The flywheel for an internal combustion engine as recited in Claim 1, **characterized in that** the inner circumferential part of the elastic member (2) is fastened to the crankshaft (1) by attaching bolts (4), and the spring member (10) is disposed on the radial outward side of the attaching bolts (4) so that the spring member is not tightened by the attaching bolts.

3. The flywheel for an internal combustion engine as recited in Claim 1, **characterized in that** the spring member (10) is an annular disc spring which is shaped like a truncated cone, and which extends radially inwards from an outer circumference to an inner circumference, and the elastic plate (2) is curved so that the inner circumference of the spring member (10) is out of contact with the elastic plate (2).

4. The flywheel for an internal combustion engine as recited in Claim 1, **characterized in that** the mass body (5) is formed with a positioning step (11) to hold an outer circumference of the spring member (10) in position so as to prevent the spring member from moving radially , and an inner circumference of the spring member (10) is held in the axial gap on the radial outward side of the inner circumferential part of the elastic plate (2) fixed to the crankshaft (1).

5. The flywheel for an internal combustion engine as recited in Claim 1, **characterized in that** the spring member (10) is comprised of a press formed disc spring shaped in the shape of a truncated cone, and a contact surface of the disc spring is formed into a curved shape at the time of press forming.

6. The flywheel for an internal combustion engine as recited in Claim 1, **characterized in that** the elastic plate (2) is press formed, and a contact surface of the elastic plate is formed into a curved shape at the time of press forming.

7. A flywheel for internal combustion engine, provided with an approximately disc-shaped elastic plate (2) that is fixed, at an inner circumferential part, to a crankshaft (1) together with a reinforcing plate (3), and that has a flexibility in a bending direction, and a mass body (5) fixed to an outer circumferential part of the elastic plate; and there is provided an axial gap (14) in an axial direction between the reinforcing plate (3) in a part on a radial outward side of a fixing position to the crankshaft and the mass body;
**characterized**
**in that** there is disposed, in the axial gap (14), a spring member (10) including a first end portion contacting with the mass body (5) so as to achieve a frictional damping effect and a second end portion contacting with the reinforcing plate (3) so as to achieve the frictional damping effect ; and
**in that,** in either or both of a contact portion at which the spring member (10) and the reinforcing plate (3) contact with each other and a contact portion at which the spring member (10) and the mass body (5) contact with each other, either or both of contact surfaces (5a, 10b, 3c, 10a) is curved.

8. The flywheel for an internal combustion engine as recited in Claim 7, **characterized in that** the inner circumferential part of the elastic member (2) and the reinforcing plate (3) are fastened to the crankshaft (1) by attaching bolts (4), and the spring member (10) is disposed on the radial outward side of the attaching bolts (4) so that the spring member is not tightened by the attaching bolts.

9. The flywheel for an internal combustion engine as recited in Claim 8, **characterized in that** the spring member (10) is a disc spring which is shaped like a truncated cone, and which includes an inner circumference located on the radial outward side of the attaching bolts (4).

10. The flywheel for an internal combustion engine as recited in Claim 7, **characterized in that** the reinforcing plate (3) includes a base portion (3a) fixed to the crank shaft (1) together with the inner circumferential part of the elastic member (2), and an annular flange portion (3b) projecting radially outwards from the base portion (3a) ; and the spring member (10) extends radially inwards from the first end portion to the second end portion which contacts with the annular flange portion of the reinforcing plate (3).

11. The flywheel for an internal combustion engine as recited in Claim 9, wherein the inner circumference of the spring member (10) is held in position by a positioning step (15) formed in the reinforcing plate (3) so as to prevent the spring member from moving radially.

12. The flywheel for an internal combustion engine as recited in Claim 9, wherein the spring member (10) further includes an outer circumference which is held in position by a positioning step (11) formed in the mass body (5) so as to prevent the spring member from moving radially.

13. The flywheel for an internal combustion engine as recited in Claim 7, **characterized in that** the spring member (10) is comprised of a press formed disc spring shaped in the shape of a truncated cone, and a contact surface of the disc spring is formed into a curved shape at the time of press forming.

14. The flywheel for an internal combustion engine as recited in Claim 7, **characterized in that** the reinforcing plate (3) is press formed, and a contact surface of the reinforcing plate is formed into a curved shape at the time of press forming.

## Patentansprüche

1. Schwungrad für einen Verbrennungsmotor, das mit einer in etwa scheibenartigen elastischen Platte (2), die an einem inneren Umfangsteilstück an einer Kurbelwelle (1) befestigt ist und die eine Flexibilität in einer Biegerichtung aufweist, und einem Massenkörper (5) versehen ist, der an einem äußeren Umfangsteilstück der elastischen Platte befestigt ist; wobei zwischen der elastischen Platte (2) in einem Teilstück auf einer radialen Außenseite einer Befestigungsposition zur Kurbelwelle und dem Massenkörper ein axialer Zwischenraum (7) in einer axialen Richtung vorgesehen ist; und wobei im axialen Zwischenraum (7) ein Federelement (10) angeordnet ist, das einen ersten Endbereich, der mit dem Massenkörper (5) in Berührung steht, und einen zweiten Endbereich umfasst, der mit der elastischen Platte (2) in Berührung steht;
**dadurch gekennzeichnet, dass**
das Federelement (10) im axialen Zwischenraum (7) so gehalten wird, dass der zweite Endbereich des Federelements in Reibkontakt mit der elastischen Platte (2) steht, um einen Reibungsdämpfungseffekt zu erzielen,
**dass** an einem Kontaktbereich, an dem das Federelement (10) und die elastische Platte (2) miteinander in Berührung stehen, und/oder an einem Kontaktbereich, an dem das Federelement (10) und der Massenkörper (5) miteinander in Berührung stehen, eine oder beide Kontaktflächen (2a, 10a) gekrümmt sind.

2. Schwungrad für einen Verbrennungsmotor nach Anspruch 1, **dadurch gekennzeichnet, dass** das innere Umfangsteilstück des elastischen Elements (2) an der Kurbelwelle (1) durch Befestigungsschrauben (4) befestigt ist und das Federelement (10) an der radialen Außenseite der Befestigungsschrauben (4) so angeordnet ist, dass das Federelement durch die Befestigungsschrauben nicht zusammengezogen wird.

3. Schwungrad für einen Verbrennungsmotor nach Anspruch 1, **dadurch gekennzeichnet, dass** das Federelement (10) eine ringförmige Tellerfeder ist, die wie ein Kegelstumpf geformt ist, und die sich von einem Außenumfang zu einem Innenumfang radial nach innen erstreckt, und die elastische Platte (2) so gekrümmt ist, dass der Innenumfang des Federelements (10) mit der elastischen Platte außer Kontakt steht.

4. Schwungrad für einen Verbrennungsmotor nach Anspruch 1, **dadurch gekennzeichnet, dass** der Massenkörper (5) mit einem Positionierungsabsatz (11) ausgebildet ist, um einen Außenumfang des Federelements (10) in Position zu halten, um zu verhindern, dass sich das Federelement radial bewegt, und ein Innenumfang des Federelements (10) im axialen Zwischenraum an der radialen Außenseite des inneren Umfangsteilstücks der an der Kurbelwelle (1) befestigten elastischen Platte (2) gehalten wird.

5. Schwungrad für einen Verbrennungsmotor nach Anspruch 1, **dadurch gekennzeichnet, dass** das Federelement (10) eine pressgeformte Tellerfeder umfasst, die in Form eines Kegelstumpfs ausgebildet ist, und eine Kontaktfläche der Tellerfeder zum Zeitpunkt des Pressformens in eine gekrümmte Form ausgebildet wird.

6. Schwungrad für einen Verbrennungsmotor nach Anspruch 1, **dadurch gekennzeichnet, dass** die elastische Platte (2) pressgeformt ist und eine Kontaktfläche der elastischen Platte zum Zeitpunkt des Pressformens in eine gekrümmte Form ausgebildet wird.

7. Schwungrad für einen Verbrennungsmotor, das mit einer in etwa scheibenartigen elastischen Platte (2), die an einem inneren Umfangsteilstück zusammen mit einer Verstärkungsplatte (3) an einer Kurbelwelle (1) befestigt ist, und die eine Flexibilität in einer Biegerichtung aufweist und einen Massenkörper (5) versehen ist, der an einem äußeren Umfangsteilstück der elastischen Platte befestigt ist; und ein axialer Zwischenraum (14) in einer axialen Richtung zwischen der Verstärkungsplatte (3) an einem Teilstück auf einer radialen Außenseite einer Befestigungsposition zur Kurbelwelle und dem Massenkörper vorgesehen ist;
**dadurch gekennzeichnet,**
**dass** im axialen Zwischenraum (14) ein Federelement (10) angeordnet ist, das einen ersten Endbereich, der mit dem Massenkörper (5) in Berührung steht, um einen Reibungsdämpfungseffekt zu erzielen, und einen zweiten Endbereich umfasst, der mit der Verstärkungsplatte (3) in Berührung steht, um den Reibungsdämpfungseffekt zu erzielen; und
**dass** in einem Kontaktbereich, an dem das Federelement (10) und die Verstärkungsplatte (3) miteinander in Berührung stehen, und/oder einem Kontaktbereich, an dem das Federelement (10) und der Massenkörper (5) miteinander in Berührung stehen, entweder eine von beiden oder beide Kontaktflächen (5a, 10b, 3c, 10a) gekrümmt sind.

8. Schwungrad für einen Verbrennungsmotor nach Anspruch 7, **dadurch gekennzeichnet, dass** das innere Umfangsteilstück des elastischen Elements (2) und die Verstärkungsplatte (3) an der Kurbelwelle (1) durch Befestigungsschrauben (4) befestigt sind, und das Federelement (10) an der radialen Außenseite der Befestigungsschrauben (4) so angeordnet ist, dass das Federelement durch die Befestigungsschrauben nicht zusammengezogen wird.

9. Schwungrad für einen Verbrennungsmotor nach Anspruch 8, **dadurch gekennzeichnet, dass** das Federelement (10) eine Tellerfeder ist, die wie ein Kegelstumpf geformt ist, und die einen Innenumfang umfasst, der auf der radialen Außenseite der Befestigungsschrauben (4) positioniert ist.

10. Schwungrad für einen Verbrennungsmotor nach Anspruch 7, **dadurch gekennzeichnet, dass** die Verstärkungsplatte (3) einen Basisbereich (3a), der an der Kurbelwelle (1) zusammen mit dem inneren Umfangsteilstück des elastischen Elements (2) befestigt ist, und einen ringförmigen Flanschbereich (3b) umfasst, der vom Basisbereich (3a) radial nach außen vorragt; und das Federelement (10) sich vom ersten Endbereich zum zweiten Endbereich, der mit dem ringförmigen Flanschbereich der Verstärkungsplatte (3) in Berührung steht, radial nach innen erstreckt.

11. Schwungrad für einen Verbrennungsmotor nach Anspruch 9, wobei der innere Umfang des Federelements (10) durch einen in der Verstärkungsplatte (3) ausgebildeten Positionierungsabsatz (15) in Position gehalten wird, um zu verhindern, dass sich das Federelement radial bewegt.

12. Schwungrad für einen Verbrennungsmotor nach Anspruch 9, wobei das Federelement (10) ferner einen Außenumfang umfasst, der durch einen im Massenkörper (5) ausgebildeten Positionierungsabsatz (11) in Position gehalten wird, um zu verhindern, dass sich das Federelement radial bewegt.

13. Schwungrad für einen Verbrennungsmotor nach Anspruch 7, **dadurch gekennzeichnet, dass** das Federelement (10) eine pressgeformte Tellerfeder umfasst, die in der Form eines Kegelstumpfs geformt ist, und eine Kontaktfläche der Tellerfeder zum Zeitpunkt des Pressformens in eine gekrümmte Form geformt wird.

14. Schwungrad für einen Verbrennungsmotor nach Anspruch 7, **dadurch gekennzeichnet, dass** die Verstärkungsplatte (3) pressgeformt ist und eine Kontaktfläche der Verstärkungsplatte zum Zeitpunkt des Pressformens in eine gekrümmte Form geformt wird.

## Revendications

1. Volant pour moteur à combustion interne, muni d'une plaque élastique approximativement en forme de disque (2) qui est fixée, au niveau d'une partie périphérique intérieure, à un vilebrequin (1), et qui a une flexibilité dans une direction de flexion, et un corps de masse (5) fixé sur une partie périphérique extérieure de la plaque élastique ;
dans lequel, entre la plaque élastique (2) dans une partie sur un côté extérieur radial d'une position de fixation sur le vilebrequin et le corps de masse, il est prévu un espace axial (7) dans une direction axiale, et dans lequel est disposé, dans l'espace axial (7), un élément formant ressort (10) comprenant une première partie d'extrémité en contact avec le corps de masse (5) et une deuxième partie d'extrémité en contact avec la plaque élastique (2) ;
**caractérisé**
**en ce que** l'élément formant ressort (10) est maintenu dans l'espace axial (7) de telle façon que la deuxième partie d'extrémité de l'élément formant ressort est en contact frictionnel avec la plaque élastique (2) afin de réaliser un effet d'amortissement frictionnel,
**en ce que,** dans l'une ou l'autre, ou les deux, d'une partie de contact où l'élément formant ressort (10) et la plaque élastique (2) sont en contact l'un avec l'autre et une partie de contact où l'élément formant ressort (10) et le corps de masse (5) sont en contact l'un avec l'autre, l'une ou l'autre, ou les deux, surfaces de contact (2a, 10a) est courbée.

2. Volant pour moteur à combustion interne selon la revendication 1, **caractérisé en ce que** la partie périphérique intérieure de l'élément élastique (2) est fixée au vilebrequin (1) par des boulons de fixation (4), et l'élément formant ressort (10) est disposé sur le côté extérieur radial des boulons de fixation (4) de telle manière que l'élément formant ressort n'est pas serré par les boulons de fixation.

3. Volant pour moteur à combustion interne selon la revendication 1, **caractérisé en ce que** l'élément formant ressort (10) est une rondelle Belleville annulaire qui est de forme tronconique, et qui s'étend radialement vers l'intérieur d'une périphérie extérieure à une périphérie intérieure, et la plaque élastique (2) est courbée de telle façon que la périphérie intérieure de l'élément formant ressort (10) n'est pas en contact avec la plaque élastique (2).

4. Volant pour moteur à combustion interne selon la revendication 1, **caractérisé en ce que** le corps de masse (5) est pourvu d'un gradin de positionnement (11) pour maintenir en position une périphérie extérieure de l'élément formant ressort (10) afin d'empêcher le mouvement radial de l'élément formant ressort, et une périphérie intérieure de l'élément formant ressort (10) est maintenue dans l'espace axial sur le côté extérieur radial de la partie périphérique intérieure de la plaque élastique (2) fixée au vilebrequin (1).

5. Volant pour moteur à combustion interne selon la revendication 1, **caractérisé en ce que** l'élément formant ressort (10) est constitué d'une rondelle Belleville formée à la presse et de forme tronconique, et une surface de contact de la rondelle Belleville est mise sous une forme courbée au moment du formage à la presse.

6. Volant pour moteur à combustion interne selon la revendication 1, **caractérisé en ce que** la plaque élastique (2) est formée à la presse, et une surface de contact de la plaque élastique est mise sous une forme courbée au moment du formage à la presse.

7. Volant pour moteur à combustion interne, muni d'une plaque élastique approximativement en forme de disque (2) qui est fixée, au niveau d'une partie périphérique intérieure, à un vilebrequin (1) avec une plaque de renforcement (3), et qui a une flexibilité dans une direction de flexion, et un corps de masse (5) fixé sur une partie périphérique extérieure de la plaque élastique, et il est prévu un espace axial (14) dans une direction axiale entre la plaque de renforcement (3) dans une partie sur un côté extérieur radial d'une position de fixation sur le vilebrequin et le corps de masse ;
**caractérisé**
**en ce qu'**il est prévu, dans l'espace axial (14), un élément formant ressort (10) comprenant une première partie d'extrémité en contact avec le corps de masse (5) pour réaliser un effet d'amortissement frictionnel et une deuxième partie d'extrémité en contact avec la plaque de renforcement (3) pour réaliser l'effet d'amortissement frictionnel, et
**en ce que**, dans l'une ou l'autre, ou les deux, d'une partie de contact où l'élément formant ressort (10) et la plaque de renforcement (3) sont en contact l'un avec l'autre et une partie de contact où l'élément formant ressort (10) et le corps de masse (5) sont en contact l'un avec l'autre, l'une ou l'autre, ou les deux, surfaces de contact (5a, 10b, 3c, 10a) est courbée.

8. Volant pour moteur à combustion interne selon la revendication 7, **caractérisé en ce que** la partie périphérique intérieure de l'élément élastique (2) et la plaque de renforcement (3) sont fixées au vilebrequin (1) par des boulons de fixation (4), et l'élément formant ressort (10) est disposé sur le côté extérieur radial des boulons de fixation (4) de telle manière que l'élément formant ressort n'est pas serré par les boulons de fixation.

9. Volant pour moteur à combustion interne selon la revendication 8, **caractérisé en ce que** l'élément formant ressort (10) est une rondelle Belleville qui est de forme tronconique, et qui comprend une périphérie intérieure située sur le côté extérieur radial des boulons de fixation (4).

10. Volant pour moteur à combustion interne selon la revendication 7, **caractérisé en ce que** la plaque de renforcement (3) comprend une partie de base (3a) fixée au vilebrequin (1) avec la partie périphérique intérieure de l'élément élastique (2), et une partie de rebord annulaire (3b) faisant saillie radialement vers l'extérieur depuis la partie de base (3a), et l'élément formant ressort (10) s'étend radialement vers l'intérieur de la première partie d'extrémité à la deuxième partie d'extrémité qui est en contact avec la partie de rebord annulaire de la plaque de renforcement (3).

11. Volant pour moteur à combustion interne selon la revendication 9, dans lequel la périphérie intérieure de l'élément formant ressort (10) est maintenue en position par un gradin de positionnement (15) formé dans la plaque de renforcement (3) afin d'empêcher le mouvement radial de l'élément formant ressort.

12. Volant pour moteur à combustion interne selon la revendication 9, dans lequel l'élément formant ressort (10) comporte en outre une périphérie extérieure qui est maintenue en position par un gradin de positionnement (11) formé dans le corps de masse (5) afin d'empêcher le mouvement radial de l'élément formant ressort.

13. Volant pour moteur à combustion interne selon la revendication 7, **caractérisé en ce que** l'élément formant ressort (10) est constitué d'une rondelle Belleville formée à la presse et de forme tronconique, et une surface de contact de la rondelle Belleville est mise sous une forme courbée au moment du formage à la presse.

14. Volant pour moteur à combustion interne selon la revendication 7, **caractérisé en ce que** la plaque de renforcement (3) est formée à la presse, et une surface de contact de la plaque de renforcement est mise sous une forme courbée au moment du formage à la presse.
